# EUROPÄISCHE PATENTANMELDUNG

(11) **EP 4 064 132 A1**
(43) Veröffentlichungstag der Anmeldung: **28.09.2022**
(21) Anmeldenummer: 21163977.8
(22) Anmeldetag: 22.03.2021
(51) Int. Cl.: G06N 3/04, G06N 3/08, G06K 9/00, G06K 9/20, G06K 9/62

(54) **VEREINFACHTES TRAINING FÜR MASCHINELLES LERNEN**

(71) Anmelder: Siemens Aktiengesellschaft, 80333 München (DE)
(72) Erfinder: Denneler, Stefan, 81371 München (DE); Gigler, Alexander Michael, 86836 Untermeitingen (DE); Goldammer, Matthias, 80687 München (DE)

(57) **Zusammenfassung**

Die Erfindung gibt ein Computer-implementiertes Verfahren zum Training eines Vorhersagemodells, wobei
- ein erstes Vorhersagemodell (M1) bereitgestellt wird,
- ein zweites Vorhersagemodell (M2) barreitgestellt wird,
- zu beobachtende Objekte (OJ) bereitgestellt werden,
- durch eine erste Sensoreinheit (S1) erste Datenpunkte (D1) und gleichzeitig durch eine zweite Sensoreinheit (S2) zweite Datenpunkte (D2) durch Beobachtung der Objekte (OJ) gewonnen werden,
- mittels des ersten Vorhersagemodells (M1) die ersten Datenpunkte (D1) gelabelt (LB) werden, und
- das zweite Vorehrsagemodell (M2) mit den zweiten Datenpunkten (D2) und aus dem ersten Vorhersagemodell (M1) ermittelten korrespondierenden Labeln (LB) trainiert wird.

Ein zugehöriges System und eine Verwendung werden ebenfalls angegeben.

## Beschreibung

### GEBIET DER ERFINDUNG

Die Erfindung betrifft ein computer-implementiertes Verfahren und ein System zum Training eines Vorhersagemodells. Die Erfindung betrifft auch eine Verwendung des Systems zum Vorhersagen eines Merkmals.

### HINTERGRUND DER ERFINDUNG

Das Training von Vorhersagemodellen im Bereich des maschinellen Lernens bzw. der künstlichen Intelligenz erfordert eine breite Datenbasis. In der Regel müssen große Mengen der zu erkennenden Daten in annotierter Form als Trainingsmaterial vorhanden sein, damit das trainierte Modell die Verknüpfung zwischen Eingangsdaten und dem gewünschten Ergebnis (Annotation) erlernen kann.

Bei der Anwendung (Inferenz) des Modells werden dann die wahrscheinlichsten Ergebnisse ermittelt. Die Qualität der Erkennung hängt dabei stark von Menge und Qualität der Trainingsdaten ab. Das Problem tritt bei Deep Learning Ansätzen basierend auf neuronalen Netzen noch stärker auf, da hier sehr große Datenmengen vorhanden sein müssen. Hierbei wirkt sich die zum Training verwendete Datenbasis direkt aus, wobei sich eine vorliegende Übervorteilung einzelner Datenbereiche, d.h. eine Ungleichverteilung der vorliegenden Daten, die spätere Vorhersage direkt beeinflusst.

Man spricht vom Bias / Vorurteil des Modells. Die Trainingsdaten müssen daher nicht nur in Hinblick auf Menge der Daten und Korrektheit der Annotationen, sondern auch in Bezug auf die Verteilung von hoher Qualität sein.

Bekannt wurde das Bias-Problem zuletzt vor allem durch die ungleiche Behandlung von Menschen verschiedener Hautfarbe bei der Anwendung von Methoden der künstlichen Intelligenz (KI) in Bewertungsprozessen von Bildern. Andere Einflüsse, die Bias bei Bilddaten verursachen können, sind z.B. die Umgebungshelligkeit, die Objektbeleuchtung, die Farben, etc. Bei anderen Datenmodalitäten spielen häufig ebenfalls Umgebungsbedingungen eine beeinflussende Rolle, die Bias verursacht.

Typischerweise ist die Übertragbarkeit von trainierten Modellen auf andere Datenmodalitäten gering und umso kritischer, je größer der Unterschied der Sensoreinheiten ist. So kann schon z.B. für visuelle Kameras eine Veränderung der Beleuchtung das Ergebnis nachhaltig beeinflussen. Daher ist ein ähnlich großer und qualitativ hochwertiger Datensatz notwendig, um eine zweite Datenmodalität zu trainieren, wie für die erste, ursprüngliche Datenmodalität. Alle Daten müssen (üblicherweise händisch) gelabelt, d.h. indiziert werden, damit der lernende Algorithmus (= das Vorhersagemodell) die Daten für das Training nutzen kann. Derartige Arbeiten sind mit großem Zeit- und Personalaufwand und damit Kosten verbunden, wobei sich dies mit der Anzahl der zu lernenden Sensoreinheiten multipliziert.

Da der Kern der Trainingsdaten eine Verknüpfung von Eingangsund gewünschter Ausgangsgröße ist, gibt es nur wenige Optionen: Entweder liegen die Daten aus anderen Quellen schon vor, wie z.B. bei Bilddatenbanken mit Labels, oder müssen gezielt erstellt werden. In beiden Fällen liegt ein manueller Vorgang in der Annotation zugrunde. Es sind dafür keine automatisierten Ansätze zur Erzeugung von Trainingsdaten bekannt. Zusätzliche Datenmodalitäten erfordern einen neuen Trainingsdatensatz.

Um den Bias zu vermeiden, wird in der Literatur (z.B. Batista, Gustavo EAPA, Ronaldo C. Prati, and Maria Carolina Monard. "A study of the behavior of several methods for balancing machine learning training data." ACM SIGKDD explorations newsletter 6.1 (2004): 20-29) das "Daten-Balancing" empfohlen, was aber die verfügbare Datenmenge auf die kleinste Untermenge reduziert.

### ZUSAMMENFASSUNG DER ERFINDUNG

Es ist Aufgabe der Erfindung, eine Lösung anzugeben, die das Training von Vorhersagemodellen vereinfacht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Folgende Begriffe werden in dem beschrieben Kontext in der Patentanmeldung verwendet:
(Daten)Werte: Im maschinellen Lernen gibt es eine Unterteilung in nominale (bzw. diskrete oder kategorische) und quantitative Werte. Bei einem nominalen Wert handelt es sich um ein endliches, abzählbares und ungeordnetes Set (z.B. Farben = {Rot, Blau, Grün, Gelb}), während ein quantitativer Wert alle reellen Zahlen in einem festgelegten Intervall enthält (z.B. Uhrzeit = [0, 24)).
Features (Merkmal): Bei einem Feature handelt es sich um ein Merkmal bzw. eine Größe, dem eine bestimmte Bedeutung zugewiesen wurde. Features können sowohl durch nominale als auch quantitative Werte dargestellt werden (z.B. Berufsstatus oder Geschwindigkeit).
Datenpunkt: Bei einem Datenpunkt x handelt es sich um ein Objekt, welches sich durch die Ausprägung von einer Anzahl an Features (z.B. FPerson = {Vor name, N achname, A1 t er}) auszeichnet. Diese werden oftmals in einem Vektor repräsentiert (z.B. x1 = (Max, Mustermann, 31))
Label: Datenpunkte können mit einem oder mehreren Labels versehen werden. Dadurch erhalten sie eine Kennzeichnung bzw. eine zusätzliche Bedeutungsebene, welche den Datenpunkt mit seinen Featureausprägungen umfasst. Labels können sowohl durch nominale als auch quantitative Werte dargestellt werden (z.B. Filmgenre oder Zeit).
Klassifikation: Klassifikation ist eine Aufgabe, welche dem überwachten Lernen zugeordnet wird. Zu Beginn wird mit Hilfe von gelabelten Trainingsdaten ein Modell gelernt. In diesem Fall entspricht das Label einer Klasse bzw. einem nominalen Wert. Zi ist es dabei zu ermöglichen, noch nicht gesehene, ungelabelte Daten korrekt zu klassifizieren bzw. mit dem richtigen Label vorherzusagen.

Gegeben ist ein erstes Vorhersagemodell auf Basis einer ersten Sensoreinheit (auch als erste Modalität bezeichenbar) zur Gewinnung von Eingangsdaten. Es soll nun ein zweites Vorhersagemodell auf Basis einer zweiten Sensoreinheit (auch als zweite Modalität bezeichenbar) trainiert werden. Dazu werden beide Sensoreinheiten in einer Situation betrieben, die dem späteren Einsatz der zweiten Sensoreinheit entspricht. Für ein jedes zu erkennende Objekt (gleichbedeutend mit Ereignis) werden aus beiden Sensoreinheiten ein erster Datenpunkt bzw. ein zweiter Datenpunkt aufgenommen und das erste Vorhersagemodell für die erste Sensoreinheit angewendet. Das Ergebnis wird als Label zusammen mit dem zweiten Datenpunkt der zweiten Sensoreinheit gespeichert und bildet so einen Eintrag in eine Trainingsdatenbank. So entstehen vollautomatisiert gelabelte Trainingsdaten aus einer Vielzahl von zweiten Datenpunkten für die zweite Sensoreinheit. Auf Basis der so gelabelten Trainingsdaten kann das zweite Vorhersagemodell erstellt und/oder trainiert werden.

Da keine manuelle Bearbeitung notwendig ist, können große Mengen an Trainingsdaten erzeugt werden. Durch die großen Datenmengen kann der Bias effektiv durch Data-Balancing bekämpft werden. Zusätzlich ist es möglich, durch geschickte Wahl der zweiten Sensoreinheit typische Bias-Situationen zu umgehen.

Die Erfindung beansprucht ein computer-implementiertes Verfahren zum Training eines Vorhersagemodells, wobei
- ein erstes Vorhersagemodell bereitgestellt wird,
- ein zweites Vorhersagemodell bereitgestellt wird,
- zu beobachtende Objekte bereitgestellt werden,
- durch eine erste Sensoreinheit erste Datenpunkte und gleichzeitig durch eine zweite Sensoreinheit zweite Datenpunkte durch Beobachtung der Objekte gewonnen werden,
- mittels des ersten Vorhersagemodells die ersten Datenpunkte gelabelt werden, und
- das zweite Vorehrsagemodell mit den zweiten Datenpunkten und aus dem ersten Vorhersagemodell ermittelten korrespondierenden Labeln trainiert wird.

In einer Weiterbildung ist das erste Vorhersagmodell in einer ersten KI-Vorrichtung und das das zweite Vorhersagemodell in einer zweiten KI-Vorrichtung ausgebildet.

In einer Weiterbildung weisen die erste KI-Vorrichtung und die zweite KI-Vorrichtung jeweils ein Neuronales Netz auf.

In einer weiteren Ausführung werden die Objekte bezüglich eines ersten Merkmals beobachtet.

In einer weiteren Ausführungsform werden die ersten Datenpunkte bezüglich des ersten Merkmals gelabelt.

In einer weiteren Ausgestaltung werden die erste und die zweite Sensoreinheiten in einer Umgebungssituation betrieben, die dem späteren Einsatzort der zweiten Sensoreinheit entspricht.

In einer weiteren Ausgestaltung ist das Objekt ein menschliches Gesicht und das erste Merkmal "Maske im Gesicht".

Die Erfindung beansprucht auch ein System zum Training eines Vorhersagemodells, gekennzeichnet durch:
- ein erstes Vorhersagemodell,
- ein zweites Vorhersagemodell,
- zu beobachtende Objekte,
- eine erste Sensoreinheit, die ausgebildet ist, erste Datenpunkte durch Beobachtung der Objekte zu gewinnen,
- eine zweite Sensoreinheit, die ausgebildet ist, gleichzeitig mit der ersten Sensoreinheit zweite Datenpunkte durch Beobachtung der Objekte zu gewinnen,
- das ersten Vorhersagemodell ausgebildet ist, die ersten Datenpunkte zu labeln, und
- das zweite Vorehrsagemodell ausgebildet ist, mit den zweiten Datenpunkten und den aus dem ersten Vorhersagemodell ermittelten korrespondierenden Labeln trainiert zu werden.

Außerdem beansprucht die Erfindung eine Verwendung des erfindungsgemäßen Systems aus Datenpunkten, gewonnen aus einem weiteren Objekt, eine Vorhersage bezüglich eines Merkmals zu machen.

Die beschriebenen Vorhersagemodelle trainieren sich gegenseitig, ohne den bisher notwendigen massiven Einsatz von Messkampagnen und Personal. Das Verfahren ist somit deutlich kostengünstiger als bisherige Umsetzungen.

Das Problem des Bias kann durch Wahl der zweiten Sensoreinheit günstig beeinflusst werden, ohne aufwendige manuelle Neu-annotation zu erfordern. (Z.B. kann eine Thermografiekamera als Sensor für die Datenerfassung keinerlei Farben identifizieren.) Die beiden Vorhersagemodelle können somit gleichverteilter und zielgerichteter in ihren Vorhersagen werden.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

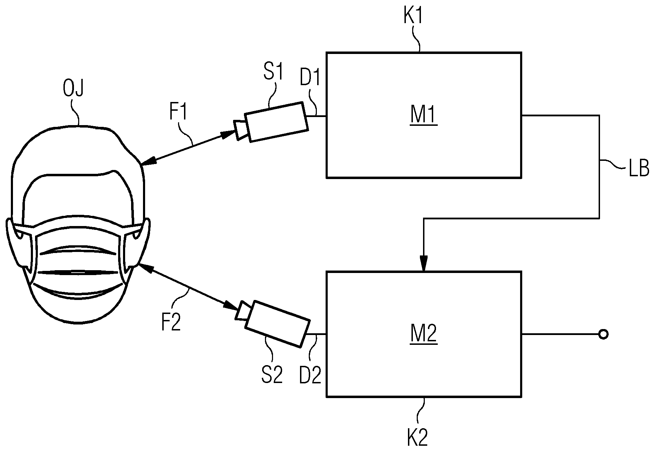

Die Zeichnung zeigt ein Blockschaltbild eines Systems zum Training eines Vorhersagemodells.

### DETAILLIERTE BESCHREIBUNG DER ERFINDUNG

Im Folgenden wird anhand des Ausführungsbeispiels einer "Maskenerkennung" gemäß der Zeichnung die Erfindung beschrieben. Es existiere ein erstes Vorhersagemodell M1 in einer ersten KI-Vorrichtung K1 zur Erkennung von Masken (erstes Merkmal F1) zur Pandemiebekämpfung basierend auf klassischen Bilddaten von einer (Überwachungs-) Kamera, der sogenannten ersten Sensoreinheit S1 (= erste Datenmodalität).

Ein zweites Vorhersagemodell M2 einer zweiten KI-Vorrichtung K2 soll nun basierend auf einer Thermografie-Kamera, der sogenannten zweiten Sensoreinheit S2 (= zweite Datenmodalität) trainiert werden. Hierdurch soll die zweite Sensoreinheit S2 neben der Wärmebildgebung für z.B. eine Körpertemperaturbestimmung (zweites Merkmal F2) auch erkennen, ob Masken (erstes Merkmal F1) getragen werden. Da in der zweiten Sensoreinheit S2 keine Farben detektiert werden können, sondern ausschließlich die Wärmeemission von Materialien betrachtet wird, ist diese Datenerfassung auch frei von Bias, beispielsweise durch die Hautfarbe einer Person.

Im Falle von Thermografiekameras im Langwellen-Wellenlängenbereich (7 - 14 µm, z.B. Bolometerkameras) sind die Bilddaten sogar von einer Objektbeleuchtung unabhängig.

Die erste Sensoreinheit S1 und die zweite Sensoreinheit S2 sammeln erste und zweite Datenpunkte D1 und D2 vom selben Objekt OJ, das in einer vorgegebenen Weise vor den Kameras der beiden Sensoreinheiten S1 und S2 platziert wurde. Beide Datenpunkte D1 und D2 sind somit hinreichend gleichzeitig, so dass keine signifikanten Veränderungen auftreten können. Das erste Vorhersagemodell M1 sagt das erste Merkmal F1 vorher und labelt damit die zweiten Datenpunkte D2 der zweiten Sensoreinheit S2, die zunächst nur eine Beobachtung, d.h. eine Datensammlung, vornimmt. Die zweiten Datenpunkte D2 der zweiten Sensoreinheit S2 werden außerdem mit den optional vorliegenden Informationen des zweiten Merkmals F2 gelabelt.

Im Anschluss wird auf den gelabelten zweiten Datenpunkten der zweiten Sensoreinheit S2 das (oder mehrere) zweite Vorhersagemodell M2 trainiert, welches nun erlaubt, nicht nur das "klassisch" zugängliche zweite Merkmal F2 sondern auch das erste Merkmal F1 vorherzusagen.

Dabei können alle denkbaren Varianten der Vorhersage trainiert werden: "erstes Merkmal F1 alleine" oder "zweites Merkmal F2 unter Berücksichtigung des ersten Merkmals F1" oder "je ein Vorhersagemodell für das erste Merkmal F1 und das zweite Merkmal F2 separat" oder weitere Kombinationen.

Das Ergebnis der Datenaufnahme sind Trainingsdaten für die zweite Sensoreinheit S2 (hier für die Thermokamera), wobei die Trainingsdaten automatisch aus dem ersten Vorhersagemodell M1 für die bekannte erste Sensoreinheit S1 (hier visuelle RGB-Kamera) erzeugt werden.

Die beschriebene Vorgehensweise erzeugt einen neuen Trainingsdatensatz von einem gelabelten Vorhersagemodell auf eine neue Sensoreinheit. Alternativ dazu kann statt eines neuen Trainingsdatensatzes auch eine Übertragungsfunktion erlernt werden. Systeme zum maschinellen Lernen, wie zum Beispiel "U-Net", sind in der Lage aus einem Eingangsbild ein Ausgangsbild zu berechnen, das besondere gewünschte Eigenschaften hat. Zum Beispiel ist damit das Einfärben von Schwarz-Weiß-Aufnahmen möglich.

Wendet man ein solches System auf die beschriebenen gemeinsamen Aufnahmen von Sensoreinheit S1 und S2 an, ist bereits ohne Annotation das Erlernen einer Übertragungsfunktion möglich. Das System erlernt durch den Vergleich z.B. von Bildern einer RGB-Kamera mit einer Thermokamera, wie ein wahrscheinliches Thermobild für ein RGB-Bild aussehen würde. Die erlernte Übertragungsfunktion kann danach auf vorhandene Trainingsdaten für die erste Sensoreinheit S1 angewendet werden, um Trainingsdaten für die zweite Sensoreinheit S2 zu erzeugen.

Der Vorteil dieser Methode ist eine nachträgliche Anwendung der Übertragungsfunktion auf neue Modelle. Da für das Erlernen der Übertragungsfunktion zwei Bildbereiche aufeinander gemappt werden, ist für diese Variante des Lernens einer gemeinsamen Kalibrierung der beiden Kameras Bildquelle S1 und S2 notwendig. Die Kalibrierung umfasst jeweils separat oder gemeinsam: Perspektivenkorrektur und/oder Fokussierbarkeit und/oder Objektive mit festem Fokus und/oder Entzerrungsprozeduren etc., was die Erstellung einer Transformationsfunktion ermöglicht. Hierdurch können die Möglichkeiten der Bildsegmentierung (Feature-Extraktion), die zu Eigenschaft-1 hinführen, ebenfalls auf das Training von Eigenschaft-2 übertragen werden.

Nachteil der Übertragungsmethode ist, dass von der ersten Sensoreinheit S1 nicht erfassbare Eigenschaften (z.B. die Körpertemperatur) nicht vom Übertragungsdatensatz erfasst werden. Diese Eigenschaften gehen dabei verloren, was aber auch gezielt genutzt werden kann: Gibt es einen möglichen Bias in der zweiten Sensoreinheit S2, der in der ersten Sensoreinheit S1 nicht vorhanden sein kann, findet sich dieser auch nicht in den Trainingsdaten. Die Anwendbarkeit der Methoden zur Trainingsdatenerzeugung und Übertragungsfunktion hängt dabei vom Einsatzfall ab.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- D1: Erster Datenpunkt
- D2: Zweiter Datenpunkt
- F1: Erstes Merkmal
- F2: Zweite Merkmal
- K1: Erste KI-Vorrichtung
- K2: Zweite KI-Vorrichtung
- LB: Label
- M1: Erstes Vorhersagemodell
- M2: Zweites Vorhersagemodell
- OJ: Objekt
- S1: Erste Sensoreinheit
- S2: Zweite Sensoreinheit

## Patentansprüche

1. Computer-implementiertes Verfahren zum Training eines Vorhersagemodells, wobei
- ein erstes Vorhersagemodell (M1) bereitgestellt wird,
- ein zweites Vorhersagemodell (M2) bereitgestellt wird,
- zu beobachtende Objekte (OJ) bereitgestellt werden,
- durch eine erste Sensoreinheit (S1) erste Datenpunkte (D1) und gleichzeitig durch eine zweite Sensoreinheit (S2) zweite Datenpunkte (D2) durch Beobachtung der Objekte (OJ) gewonnen werden,
- mittels des ersten Vorhersagemodells (M1) die ersten Datenpunkte (D1) gelabelt (LB) werden, und
- das zweite Vorhersagemodell (M2) mit den zweiten Datenpunkten (D2) und aus dem ersten Vorhersagemodell (M1) ermittelten korrespondierenden Labeln (LB) trainiert wird.

2. Verfahren nach Anspruch 1, **dadurch gekennzeichnet,**
**dass** das erste Vorhersagmodell (M1) in einer ersten KI-Vorrichtung (K1) und das zweite Vorhersagemodell (M2) in einer zweiten KI-Vorrichtung (K2) ausgebildet ist.

3. Verfahren nach Anspruch 2, **dadurch gekennzeichnet,**
**dass** die erste KI-Vorrichtung (K1) und die zweite KI-Vorrichtung (K2) jeweils ein Neuronales Netz aufweisen.

4. Verfahren nach einem der vorhergehenden Ansprüche, **dadurch gekennzeichnet,**
**dass** die Objekte (OJ) bezüglich eines ersten Merkmals (M1) beobachtet werden.

5. Verfahren nach Anspruch 4, **dadurch gekennzeichnet,**
**dass** die ersten Datenpunkte (D1) bezüglich des ersten Merkmals (M1) gelabelt werden.

6. Verfahren nach einem der vorhergehenden Ansprüche, **dadurch gekennzeichnet,**
**dass** die erste und die zweite Sensoreinheiten (S1 und S2) in einer Umgebungssituation betrieben werden, die dem späteren Einsatzort der zweiten Sensoreinheit (S2) entspricht.

7. Verfahren nach einem der Ansprüche 4 bis 6, **dadurch gekennzeichnet,**
**dass** das Objekt (OJ) ein menschliches Gesicht und das erste Merkmal (M1) "Maske im Gesicht" ist.

8. System zum Training eines Vorhersagemodells, **gekennzeichnet durch**:
- ein erstes Vorhersagemodell (M1),
- ein zweites Vorhersagemodell (M2),
- zu beobachtende Objekte (OJ),
- eine erste Sensoreinheit (S1), die ausgebildet ist, erste Datenpunkte (D1) **durch** Beobachtung der Objekte (OJ) zu gewinnen,
- eine zweite Sensoreinheit (S2), die ausgebildet ist, gleichzeitig mit der ersten Sensoreinheit (S1) zweite Datenpunkte (D2) **durch** Beobachtung der Objekte (OJ) zu gewinnen,
- das ersten Vorhersagemodell (M1) ausgebildet ist, die ersten Datenpunkte (D1) zu labeln (LB), und
- das zweite Vorehrsagemodell (M2) ausgebildet ist, mit den zweiten Datenpunkten (D2) und den aus dem ersten Vorhersagemodell (M1) ermittelten korrespondierenden Labeln (LB) trainiert zu werden.

9. System nach Anspruch 8, **dadurch gekennzeichnet,**
**dass** das erste Vorhersagemodell in einer ersten KI-Vorrichtung und das zweite Vorhersagemodell in einer zweiten KI-Vorrichtung ausgebildet ist.

10. System nach Anspruch 9, **dadurch gekennzeichnet,**
**dass** die erste KI-Vorrichtung und die zweite KI-Vorrichtung jeweils ein Neuronales Netz aufweisen.

11. System nach einem der Ansprüche 8 bis 10, **dadurch gekennzeichnet,**
**dass** die Objekte bezüglich eines ersten Merkmals beobachtbar sind.

12. System nach Anspruch 11, **dadurch gekennzeichnet,**
**dass** die ersten Datenpunkte bezüglich des ersten Merkmals labelbar sind.

13. System nach einem der Ansprüche 8 bis 12, **dadurch gekennzeichnet,**
**dass** die erste und die zweite Sensoreinheiten in einer Umgebungssituation betreibbar sind, die einem späteren Einsatzort der zweiten Sensoreinheit entspricht.

14. System nach einem der Ansprüche 11 bis 13, **dadurch gekennzeichnet,**
**dass** das Objekt ein menschliches Gesicht und das erste Merkmal "Maske im Gesicht" ist.

15. Verwendung eines Systems nach einem der Ansprüche 8 bis 14 mit aus Datenpunkten, gewonnen aus einem weiteren Objekt, eine Vorhersage bezüglich eines Merkmals zu machen.
